# EUROPEAN PATENT APPLICATION

(11) **EP 4 276 137 A1**
(43) Date of publication of application: **15.11.2023**
(21) Application number: 22305709.2
(22) Date of filing: 13.05.2022
(51) Int. Cl.: C08J 3/05, B33Y 10/00

(54) **COMPOSITE POWDER, IN PARTICULAR SUITABLE FOR ADDITIVE MANUFACTURING**

(71) Applicant: Institut national de recherche pour l'agriculture, l'alimentation et l'environnement, 75007 Paris (FR)
(72) Inventor: The designation of the inventor has not yet been filed
(74) Representative: Jacobacci Coralis Harle

(57) **Abstract**

The present invention relates to a composite powder, in particular suitable for additive manufacturing, wherein said composite powder comprises composite particles comprising:
- at least one polymer matrix chosen among polyhydroxyalkanoates (PHA), and
- at least one auxiliary matrix chosen among biobased fillers and biobased waxes.

## Description

### Technical field of the invention

The present invention relates to the technical field of composite powder.

It relates in particular to the technical field of composite powder, in particular suitable for additive manufacturing.

### State of the art

Additive manufacturing (AM) is a new way of designing and producing functional objects by minimizing the quantity of material used, compared to subtractive techniques.

For example, selective laser sintering (SLS) printing is a powder bed fusion based additive manufacturing technology that uses a laser system to form objects by sintering powdered materials. Overall 3D printing technologies, SLS has many advantages: high accuracy, speed, reliability and lack of support structures. It is also a cost-effective and robust AM technology. SLS has been traditionally used for the additive manufacturing of metals and the range of commercially available powdered polymer materials that can be used in the process is still limited.

Indeed, the microstructures (e.g. particle size, size distribution, surface morphology and particle shape) and physicochemical properties of powder (e.g. thermal and rheology properties) used in the SLS process strongly influence the density, surface quality, dimensional accuracy and mechanical performance of the 3D printed object. A priori, finer powders are likely to favor the production of higher resolution objects. However, cohesion effects due to interparticular forces between the smallest particles could reduce the flowability of the powder and affect the formation of regular layers. The shape of the particles is also important; spherical particles will be more spreadable than particles with a heterogeneous shape.

Minimizing the quantity of plastic in the environment is a key to reducing the impact of human activity on the environment and contributing to a societal shift towards a circular bioeconomy.

Combining additive manufacturing with biobased and fully biodegradable materials and/or their composites (sourced from biomass feedstocks) is a way to work but there are still too few materials suitable for these techniques.

Thus, the development of new biodegradable and biobased polymer and composite powders has become of increasing interest. And potential applications are emerging in many fields such as pharmaceuticals, tissue engineering, food, and the high-tech automotive sector.

In practice, some bioplastics are classified as compatible with additive manufacturing techniques, but most of them have a significant environmental impact (related to an important carbon footprint for their production, or a weak biodegradability in normal environment).

In addition, the mechanical properties of most biobased materials are different to those of petroleum-based materials; and currently they are mainly intended to packaging application.

There is therefore a real need for new formulations which could be used in additive manufacturing technologies, while having interesting mechanical properties.

### Presentation of the invention

In order to remedy the aforementioned drawback of the state of the art, the present invention proposes a new composite powder, in particular suitable for additive manufacturing.

More particularly, according to the invention, said composite powder comprises composite particles comprising:
- at least one polymer matrix chosen among polyhydroxyalkanoates (PHA), and
- at least one auxiliary matrix chosen among biobased fillers and biobased waxes.

A formulation containing said combination presents many advantages over the isolated components.

Waxes improve the properties of PHAs by adding hydrophobicity and antibacterial properties. They also increase the crystallization rate for some PHAs (e.g. poly-3-hydroxyoctanoate), allowing their use in additive manufacturing processes. For a brittle polymer such as poly-3-hydroxybutyrate, they introduce flexibility.

Addition of PHAs to wax also reinforce the mechanical properties of the wax while maintaining its biocompatility and biodegradability.

Addition of biobased filler like lignocellulosic powder to such matrices also increase their crystallization rate by initiating the nucleation process around biomass particles while additionally enhancing the mechanical properties of the composite.

Therefore, composite particles combining polyhydroxyalkanoates (PHA), on the one hand, and biobased fillers and/or biobased waxes, on the other hand, are suitable for a huge range of applications where biobased, biocompatible (depending on the type of filler) and biodegradable composite materials are desired.

Other non-limiting and advantageous characteristics of the composite powder in accordance with the invention, taken individually or in all technically possible combinations, are the following:
- said polyhydroxyalkanoates (PHA) of said at least one polymer matrix are chosen among polyhydroxybutyrate (PHB), polyhydroxyvalerate (PHV), polyhydroxyhexanoate (PHH), polyhydroxyoctanoate (PHO), and their copolymers;
- said composite particles comprise from 5 to 95 % w/w, preferably from 5 to 80 % w/w, more preferably from 5 to 60 % w/w, of said at least one polymer matrix;
- said biobased fillers are chosen among cellulosic and/or lignin and/or lignocellulosic components, preferably among cellulose, lignin, and lignocellulose;
- said composite particles comprise from 0 to 95 % w/w of said biobased fillers;
- said biobased waxes are chosen among animal wax, as beeswax, plant wax or vegetal waxes and other mixture of wax esters, esters of fatty acid and/or fatty acids produced by animals or extracted from plant materials (including crude and refined waxes);
- said composite particles comprise from 0 % to 95 % w/w of said biobased waxes;
- said composite particles have a median size from 1 to 900 µm, preferably from 10 to 500 µm, preferably from 10 to 200 µm.

The present invention also relates to the process for preparation of a composite powder according to the invention, comprising the following steps:
- a mixing step, wherein said at least one polymer matrix and said at least one auxiliary matrix, possibly with surfactant and/or Pickering particles, are mixed with heat input to obtain a mixture,
- an emulsion step, wherein said mixture is mixed with a dispersion phase to create an emulsion of oil in water type, said mixture forming a dispersed phase consisting of droplets,
- a solidification step, wherein said droplets are solidified to form said composite particles,
- a separation step, wherein said composite particles are separated from the dispersion phase.

In another embodiment, the process for preparation comprises the following steps:
- a solubilization step, wherein said at least one polymer matrix and said at least one auxiliary matrix are dissolved and/or dispersed in a deep eutectic solvent (DES), e.g., reline, and
- a precipitation step, wherein said at least one polymer matrix and said at least one auxiliary matrix are precipitated to obtain said composite particles.

The present invention also relates to the additive manufacturing, preferably additive laser manufacturing, preferably powdered additive manufacturing and more preferably selective laser sintering, comprising a step of bounding a composite powder according to the invention.

The present invention also relates to a product obtained by an additive manufacturing according to the invention.

Of course, the different characteristics, variants and embodiments of the invention can be associated with each other in various combinations insofar as they are not incompatible or exclusive of each other.

### Detailed description of the invention

In addition, various other characteristics of the invention emerge from the appended description made with reference to the drawings which illustrate non-limiting forms of embodiment of the invention and where:

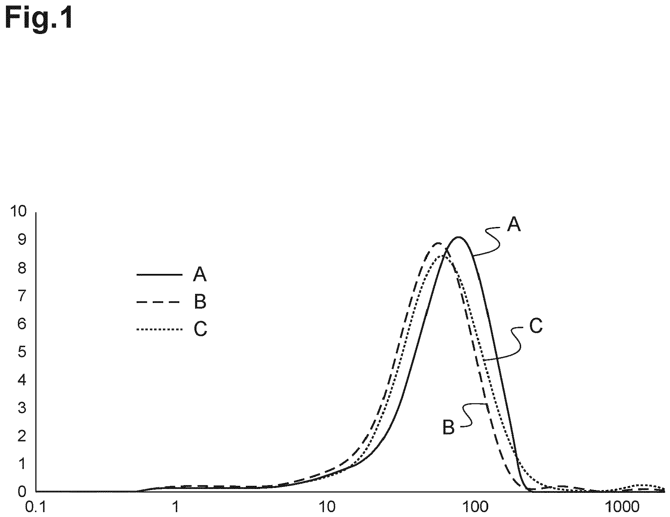

[Fig. 1] shows particle size distributions of composite powder produced by emulsification and filtration, wherein curves relate respectively to (A) beeswax / Pine bark (0.6/0.4), (B) PHO / Pine bark (0.6/0.4), (C) PHO / beeswax / Pine bark (0.2 / 0.4 / 0.4); x and y-axes are respectively the diameter in µm and the volume in percentage;

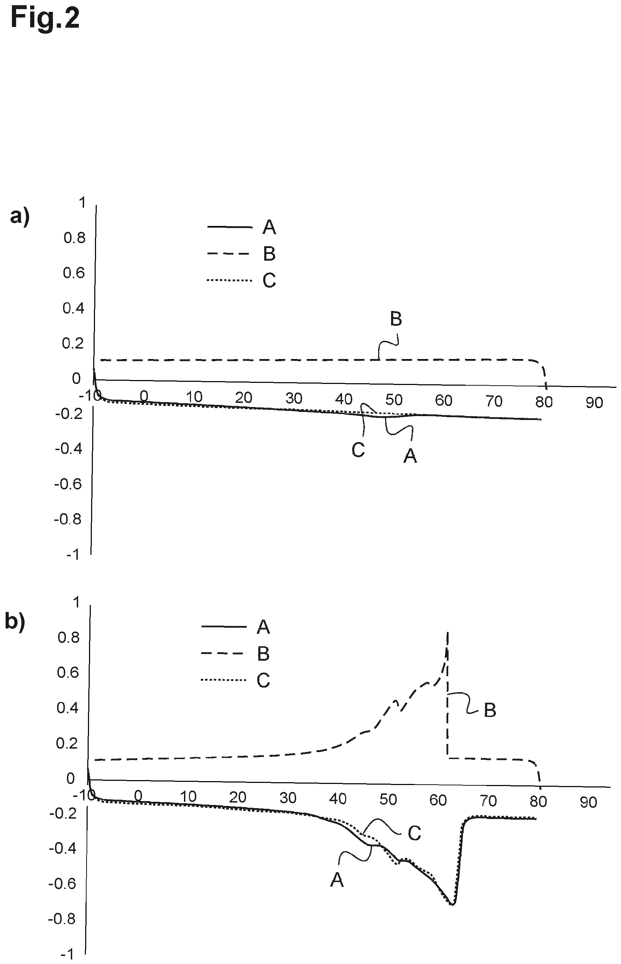

[Fig. 2] shows DSC measurement for PHO/Pine bark (a) and for PHO/Beeswax/Pine bark (b) composite powders obtained by emulsification; x and y-axes are respectively the temperature in °C and the heat flow (normalized) in W.g⁻¹; and wherein (A) is a ramp of 5°C/min to 80°C, (B) is a ramp of 5°C/min to -10°C and (C) is a ramp of 5°C/min to 80°C;

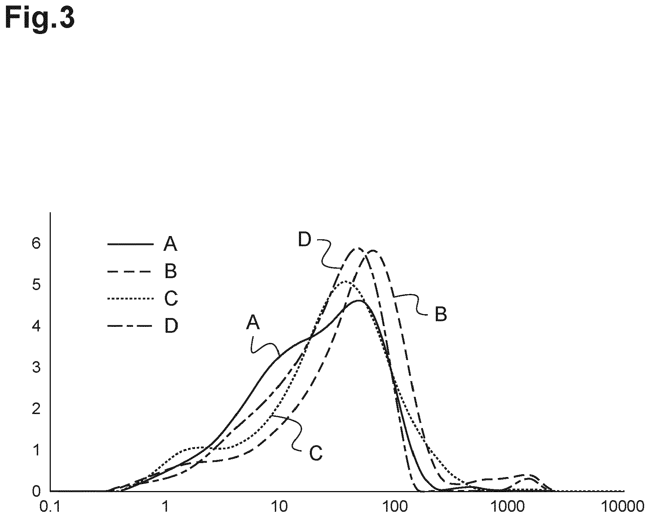

[Fig. 3] shows particle size distributions for powder produced in experiment 1.1., i.e. precipitation of the composite polymer melt in reline by addition of pure cold water; x and y-axes are respectively the diameter in µm and the volume in percentage; wherein (A) is Pine bark raw powder, (B) is a combination PHB/Wax (0.5/0.5), (C) is a combination PHB/Wax/Pine bark (0.4/0.4/0.2), (D) is raw PHB, before being dissolved in Deep solvent;

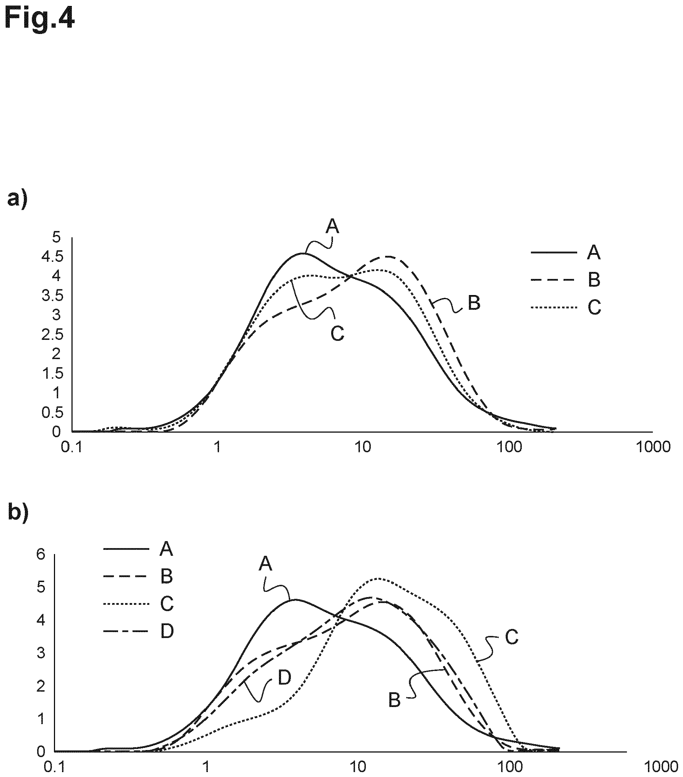

[Fig. 4] shows particle size distributions of powders precipitated separately, on the one hand, powder from PHB and wax, experiments 2.1, 2.2, and 2.11 (a) wherein (A) is PHB, (B) is wax and (C) is PHB/wax (0.5/0.5) mixed after precipitation, and on the other hand powders from PHB, wax and Pine bark, experiments 2.1, 2.2, 2.4 and 2.12 (b) wherein (A) is PHB, (B) is wax, (C) is Pine bark and (D) is PHB/wax/Pine bark (0.3/0.3/0.4) mixed after precipitation; x and y-axes are respectively the diameter in µm and the volume in percentage;

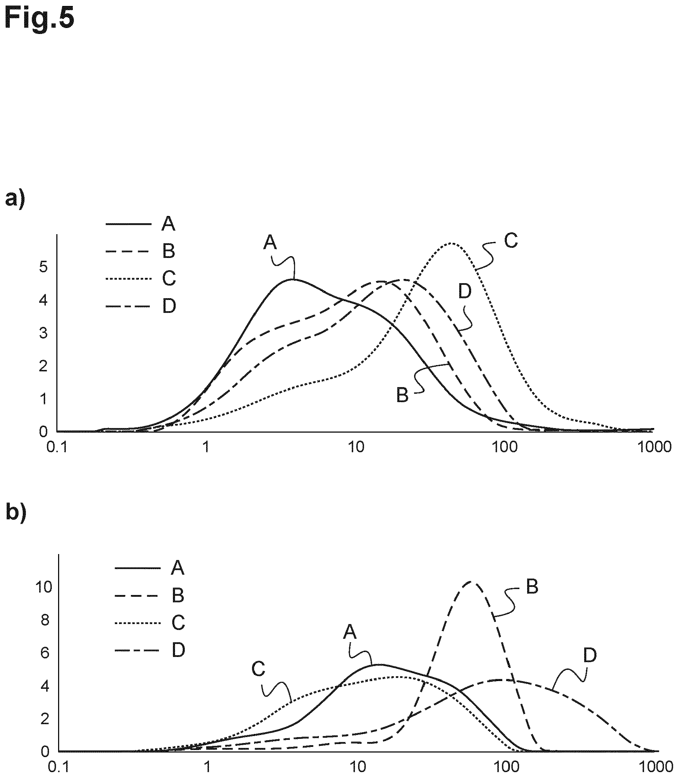

[Fig. 5] shows particle size distributions of composite powders from PHB and Wax (a) wherein (A) is PHB, (B) is wax, (C) is PHB/wax (0.5/0.5) and (D) is PHB/wax (0.5/0.5) mixed before precipitation, and from PHB, Wax and Pine bark (b) wherein (A) is Pine bark, (B) is wax/Pine bark (0.6/0.4), (C) is PHB/Pine bark (0.6/0.4) and (D) is PHB/wax/Pine bark (0.3/0.3/0.4); x and y-axes are respectively the diameter in µm and the volume in percentage.

The present invention thus relates to a composite powder, in particular suitable for additive manufacturing (AM).

As used herein, the term "powder" refers to a material that is suitable for additive manufacturing and this material is in a powder form. The powder is typically formed of particles or particulates.

As used herein, the term "particles" or "particulates" means the smallest entity that can be identified as a particulate from its appearance among the composite powder.

In particular, it refers to a particle (or a particulate) intended to be bound three-dimensionally, due to additive manufacturing, to form the product (or object) obtained by additive manufacturing.

The term "bound" as used herein refers to direct or indirect bonding between two or more particles. For instance, it encompasses chemical bonding between particles, bonding resulting from surface melting and fusion of particles.

As used herein, additive manufacturing processes involve advantageously the stacking of one or more layers of material to create a final shape or an object near the final shape.

In the present invention and as detailed hereafter, additive manufacturing process is advantageously to sinter or melt a powder material using an electromagnetic beam, such as an energy beam, e.g., an electron beam, or a laser beam, to produce a solid material in which particles of the powder material are bonded together to generate a three-dimensional object.

Additive manufacturing process also encloses Binder Jetting (also named as powder bed and inkjet head 3D printing), wherein a binder is selectively deposited onto the powder bed, bonding these areas together to form a solid part one layer at a time.

As used herein, the composite powder comprises composite particles which can be defined advantageously as a plurality of particles (or particulates) wherein a particle is composed of two or more components having distinct chemistry and giving synergetic effects.

According to the invention, the composite powder comprises composite particles comprising:
- at least one polymer matrix chosen among polyhydroxyalkanoates (PHA), and
- at least one auxiliary matrix chosen among biobased fillers and biobased waxes.

In other words, such a composite particle comprises both at least one polymer matrix chosen among polyhydroxyalkanoates (PHA), and at least one auxiliary matrix chosen among biobased fillers and biobased waxes.

Also in other words, each composite particle comprises a mixture of at least one polymer matrix chosen among polyhydroxyalkanoates (PHA) and at least one auxiliary matrix chosen among biobased fillers and biobased waxes.

In particular, the biobased fillers and biobased waxes are advantageously obtained from natural products.

Indeed, within the context of the present specification, the word "bio-based" refers advantageously to material which are derived from plant- or animal-based materials.

In other words, a material can also be defined as bio-based if it derives in whole, or in part, from biomass resources, i.e., organic materials that are renewable.

In general, the composite particles have advantageously a median size from 1 to 900 µm, preferably from 10 to 500 µm, preferably from 10 to 200 µm.

The term "size" advantageously means a physical characteristic size of the particles linked to a method of measurement (or dimensional analysis by an appropriate technique), for example by laser diffraction or sieving or image analysis.

The size of a solid particle, and more generally of a constituent of a powder, advantageously corresponds to its "equivalent sphere diameter" or "equivalent sphere diameter", that is to say advantageously the diameter in volume (dᵥ) defined as the diameter of a perfect sphere having the same volume in the analysis as the solid particle studied.

The particle size of these particles, and in particular the particle size distribution, is advantageously defined by a value of D₅₀ or d₅₀, also called "median size" or "median diameter".

The D₅₀ represents the particle size for which 50% of the volume (or mass) has a lower (or higher) particle size; in other words, the D₅₀ is the diameter corresponding to 50% of the cumulative frequency in number, mass or volume.

Thus, as used herein, the "median size" with respect to the composite particles means advantageously the 50th percentile particle diameter (volume median particle diameter, D₅₀) in its size distribution by volume (e.g. measured by a particle size analyzer based on laser diffraction/scattering spectroscopy).

The particle size distributions can be measured by laser diffraction using a Mastersizer 2000 equipped with a Hydro2000S system.

Moreover, as specified hereinafter, composite particles comprise advantageously from 5 to 95% w/w, preferably from 5 to 80 % w/w, more preferably from 5 to 60 % w/w of said polyhydroxyalkanoates.

Said at least one auxiliary matrix comprises said biobased fillers and/or said biobased waxes.

In other words, preferably, said composite powder comprises composite particles comprising at least one polymer matrix chosen among polyhydroxyalkanoates (PHA) in combination with:
- at least one auxiliary matrix chosen among biobased fillers, or
- at least one auxiliary matrix chosen among biobased waxes, or
- at least one auxiliary matrix chosen among biobased fillers and at least one auxiliary matrix chosen among biobased waxes.

Composite particles comprise advantageously:
- from 0 % to 95 % w/w, preferably from 0 % to 80 % w/w, preferably from 20 to 80 % w/w, of said biobased fillers, and/or
- from 0 % to 95 % w/w, preferably from 0 % to 80 % w/w, preferably from 20 to 80 % w/w, of said biobased waxes.

For example, composite particles comprise advantageously:
- from 50 to 70 % w/w of said polyhydroxyalkanoates, and from 30 to 50 % w/w of said biobased fillers, or
- from 10 to 30 % w/w of said polyhydroxyalkanoates, from 30 to 50 % w/w of said biobased fillers and from 30 to 50 % w/w of said biobased waxes.

In general, the weight percentage of said at least one polymer matrix chosen among polyhydroxyalkanoates (PHA), and of said at least one auxiliary matrix chosen among biobased fillers and biobased waxes, are advantageously adjusted to reach 100 % w/w, if necessary, possibly in combination with other suitable auxiliary matrices.

Other various technical characteristics of the invention are detailed hereinafter.

### Polyhydroxyalkanoates (PHA)

As used herein, polyhydroxyalkanoates (or PHAs) are advantageously polyesters produced in nature by numerous microorganisms, including through bacterial fermentation of sugars or lipids.

Polyhydroxyalkanoates is a biopolymer coming from renewable resources and being biodegradable, as disclosed for example in Giubilini, A.; Bondioli, F.; Messori, M.; Nyström, G.; Siqueira, G. Advantages of Additive Manufacturing for Biomedical Applications of Polyhydroxyalkanoates. Bioengineering 2021, 8, 29. https://doi.org/10.3390/ bioengineering8020029 or in Mehrpouya et al., Additive manufacturing of polyhydroxyalkanoates (PHAs) biopolymers: Materials, printing techniques, and applications, Materials Science and Engineering: C, Volume 127, August 2021, 112216.

Polyhydroxyalkanoates have advantageously the following formula (I) 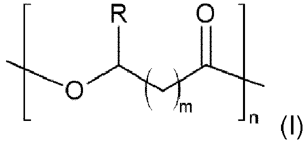
wherein R is a hydrogen atom or an alkyl side chain having advantageously from 1 to 15 carbon atoms,
m is chosen among 1, 2, 3 or 4,
n is ranging advantageously from 100 to 45,000

In the invention, depending on the length of the monomer, polyhydroxyalkanoates are advantageously chosen among three types of PHAs:
- when said monomer has 3 to 5 carbon atoms, PHAs have a short side chain, denoted *scl*-PHA *(short chain length-PHA),*
- when said monomer has 6 to 14 carbon atoms, PHAs have a medium side chain, denoted *mcl*-PHA *(medium chain length-PHA),*
- when said monomer has more than 15 carbon atoms, PHAs have a long side chain, noted *lcl*-PHA *(long chain length-PHA).*

In practice, in the present invention, polyhydroxyalkanoates are advantageously chosen among:
- polyhydroxybutyrate (PHB),
- polyhydroxyvalerate (PHV),
- polyhydroxyhexanoate (PHH),
- polyhydroxyoctanoate (PHO),
and their copolymers.

Thus, as used herein, polyhydroxyalkanoates (PHA) enclose homopolymer and copolymers.

Polyhydroxybutyrate (PHB) is advantageously chosen among poly(3-hydroxybutyrate) (P3HB) or poly-4-hydroxybutyrate (P4HB).

Copolymers of polyhydroxyalkanoates are advantageously chosen among:
- poly(3-hydroxybutyrate-co-3-hydroxyvalerate) (PHBHV or PHBV), or
- poly(3-hydroxybutyrate-co-3-hydroxyhexanoate) (PHBHHx).

In the present invention, polyhydroxyalkanoates are advantageously synthetized:
- by bacterial fermentation, or
- in some transgenic plants.

Polyhydroxyalkanoates are advantageously either thermoplastic or elastomeric materials.

The composite particles comprise advantageously from 5 to 95 % w/w, preferably from 5 to 80 % w/w, more preferably from 5 to 60 % w/w of said polyhydroxyalkanoates.

### Biobased fillers

As used herein, bio-based fillers, also named "biomass", are fillers that are based on a renewable raw material basis.

The filler is advantageously a bio-based particulate or fibrous filler. Within the context of the present specification, the word "bio-based" refers to fillers which are advantageously derived from plant- or animal-based materials.

Combinations of different types and materials of fillers may also be used.

The biobased fillers are advantageously chosen among cellulosic and/or lignin and/or lignocellulosic components, preferably among cellulose, lignin and lignocellulose.

In a preferred embodiment, the filler is a plant-based particulate or fibrous filler. In this case the filler may be a cellulosic, lignin or lignocellulosic material.

In the present embodiment, the cellulose refers to fibrous materials containing a natural polymer obtained from natural products.

Cellulose is an organic compound with the formula (C₆H₁₀O₅)ₙ, a polysaccharide consisting of a linear chain of several hundred to many thousands of *β*(1→4) linked D-glucose units.

As used herein, cellulose also enclose nanocelluloses, in particular cellulose nanofibrils (CNF).

As used also herein, cellulose also enclose pure and purified cellulose, extracted for example from wood fiber.

The lignocellulosic components mean a material composed of lignin, hemicellulose and cellulose (in varying proportions).

As used herein, lignocellulosic components comprise lignocellulosic fibers. Lignocellulosic fibers can be of various origins including flax, hemp, jute, sisal, bamboo, wood, etc.

Lignocellulosic components comprise also lignocellulosic pulp fibers that can be used to reinforce thermoplastics, e.g. Thermo-Mechanical Pulp (TMP), Chemi-thermo-mechanical pulp and chemical pulp fibers.

The filler may also be based on animal-derived fillers, in particular on animal derived fibers such as wool, hair, and silk, and fibers derived from feathers, e.g., chicken feathers. Where suitable, other parts of offal may also be used.

According to another characteristic, as a raw material for the process of preparation, the biobased fillers have advantageously a particle size of less than 500 microns, preferably less than 200 microns and ideally less than 50 microns.

### Biobased waxes

As used herein, bio-based waxes are waxes that are based on a renewable raw material basis. This can be either native or chemically modified ester waxes.

Typical, native bio-based waxes are, for example, detailed in Ullmann's Encyclopedia of Industrial Chemistry, 5th Edition, Vol.A 28, Weinheim 1996 in Chapter 2. (Waxes).

The biobased waxes are chosen advantageously among:
- animal wax, as beeswax,
- plant wax or vegetal waxes, and
- other mixture of wax esters, esters of fatty acid and/or fatty acids produced by animals or extracted from plant materials (including crude and refined waxes).

These include, for example, palm waxes such as carnauba wax, grass waxes such as candelilla wax, sugar cane wax and straw waxes, beeswax, rice wax, etc.

Chemically modified waxes are usually produced from vegetable oil-based fatty acids through esterification, transesterification, amidation, hydrogenation, etc.

For example, this also includes metathesis products of vegetable oils.

### Process for preparation of said composite powder

The present composite powder can be prepared through various process, and advantageously through two main processes.

In a first embodiment, the process for preparation comprises the following steps:
- a mixing step, wherein said at least one polymer matrix and said at least one auxiliary matrix are mixed with heat input to obtain a mixture,
- an emulsion step, wherein said mixture is mixed with a dispersion phase to create an emulsion of oil in water type, said mixture forming a dispersed phase consisting of droplets,
- a solidification step, wherein said droplets are solidified to form said composite particles,
- a separation step, wherein said composite particles are separated from the dispersion phase, e.g. a filtration step.

In the mixing step, said at least one polymer matrix and said at least one auxiliary matrix are advantageously melted and mixed (e.g. by magnetic stirring or homogenization).

Still in the mixing step and/or in said emulsion step, said at least one polymer matrix and said at least one auxiliary matrix are possibly mixed also with surfactant and/or Pickering particles.

As used herein, surfactants are well-known compounds that lower the surface tension (or interfacial tension) notably between two liquids or between a liquid and a solid.

As used herein, Pickering particles are well-known solid particles which stabilized an emulsion by adsorption onto the interface between the two phases.

In said emulsion step, the dispersion phase is advantageously an aqueous phase (water).

The dispersion phase is advantageously at a temperature ranging from 85°C to 95°C.

At the emulsion step, the mixture is advantageously ranging from 0.1 to 0.5 v/v, preferably from 0.1 to 0.25 v/v, in the dispersion phase.

The solidification step consists advantageously in a cooling step, preferably below 30°C and even below 20°C, e.g. from 5°C to 20°C. In general, the temperature of the cooling step is preferably below the melting temperature of the at least one auxiliary matrix.

In a second embodiment, the process for preparation comprises the following steps:
- a solubilization step, wherein said at least one polymer matrix and said at least one auxiliary matrix are dissolved and/or dispersed in a deep eutectic solvent (DES), e.g. reline, and
- a precipitation step, wherein said at least one polymer matrix and said at least one auxiliary matrix are precipitated, e.g., by adding water, to obtain said composite particles.

In general, a deep eutectic solvent (DES) is a type of ionic solvent with special properties composed of a mixture that forms a eutectic with a melting point much lower than either of the individual components. DES is used herein to include both the singular "solvent" and the plural "solvents".

DES are for example described by "Deep Eutectic Solvents (DESs) and Their Applications", Chem. Rev. 2014, 114, 21, 11060-11082, Publication Date: October 10, 2014, https://doi.org/10.1021/cr300162p.

DES are advantageously chosen among choline chloride-urea (ChCI-U), choline chloride-ethylene glycol (ChCI-EG), choline chloride-glycerol (ChCI-G), methyltriphenylphosphonium bromide-ethylene glycol (MeP(Ph)3Br-EG), choline chloride-malonic acid (ChCI-MA(1)), methyltriphenylphosphonium bromide-glycerol (MePh3PBr-G).

Most common DES are based on choline chloride (ChCl), carboxylic acids, and other hydrogen-bond donors, e.g., urea, citric acid, succinic acid and glycerol.

Different molecules can also be combined to produce natural deep eutectic solvents, e.g. choline chloride, citric acid, tartaric acid, glucose, ascorbic acid, sucrose and xylose.

DES are also disclosed notably in:
- Tang, B., Row, K.H. "Recent developments in deep eutectic solvents in chemical sciences". Monatsh Chem 144, 1427-1454 (2013). https://doi.org/10.1007/s00706-013-1050-3,
- Alexandre Paiva, Rita Craveiro, Ivo Aroso, Marta Martins, Rui L. Reis, and Ana Rita C. Duarte, ACS Sustainable Chemistry & Engineering 2014 2 (5), 1063-1071. DOI: 10.1021/sc500096j.

Reline (choline chloride-urea (ChCI-U)) is a well-known DES, i.e. an eutectic mixture of choline chloride and urea in a 1:2 molar ratio.

Reline is also disclosed in Oliver S. Hammond et al., "Liquid structure of the choline chloride-urea deep eutectic solvent (reline) from neutron diffraction and atomistic modelling", Green Chemistry, Issue 9, 2016

Preferably, the solubilization step is implemented such as said at least one polymer matrix and said at least one auxiliary matrix are dispersed / dissolved separately and mix before the precipitation step.

The precipitation step is advantageously obtained by adding cold water, e.g. at a temperature from 1°C to 5°C.

In said embodiments, at the start of the processes, the biobased fillers may be in the form of individual particles or fibers, but also in the form of an aggregate material, e.g., in the form of woven or non-woven layers.

Within the context of the present specification, the wording fiber encompasses monofilaments, multifilament yarns, threads, tapes, strips, and other elongate objects having a regular or irregular cross-section and a length substantially longer than the width and thickness.

In another embodiment, the biobased fillers are based on a particulate material, e.g., in the form of powder, dust, pulp, broken fibers, flakes, or chips. Examples include wood chips, wood flakes, and sawdust, and pulp, e.g., pulp of (recycled) paper or other fiber pulp.

Preferably, before mixture, the "raw" biobased fillers have a median particle size of less than 500 microns, preferably less than 200 microns, preferably from 10 to 100 µm.

The volume average particle size is preferably 10 to 50 µm, and more preferably 10 to 40 µm.

Preferably, the "raw" polymer matrix is in a form of a powder, or a powder dispersed in a liquid.

Preferably, the "raw" biobased waxes are in the form of a solid, a liquid or granules.

### Additive manufacturing and product obtained

The present invention also encloses the additive manufacturing (AM), preferably additive laser manufacturing (e.g. selective laser sintering), comprising a step of bounding a composite powder according to the invention.

Additive manufacturing thus encloses advantageously powder additive manufacturing, which is a well-known technology that uses a powder material as the molding material, wherein the powder material is bonded or sintered in a thin layer having an outline corresponding to a certain cross section of the object being formed and such layers are successively added to form the three-dimensional (3D) object.

As used herein, Selective Laser Sintering (SLS) is an additive manufacturing technique which uses a high-power laser beam to locally sinter the biopolymeric powder bed. This procedure is repeated layer-by-layer, to form a 3D structure with a predesigned architecture, generated CAD software and transferred to the 3D printer.

SLS is disclosed for example in Mehrpouya et al., Additive manufacturing of polyhydroxyalkanoates (PHAs) biopolymers: Materials, printing techniques, and applications, Materials Science and Engineering: C, Volume 127, August 2021, 112216.

Preferable, said step of bounding is implemented under inert gas, or vacuum, to avoid the burning of the biobased fillers by the laser.

And the present composite powder is particularly suitable for additive manufacturing, notably SLS, as shown herein below in the Examples.

The present invention also relates to the product obtained by an additive manufacturing according to the invention.

Of course, various other modifications may be made to the invention within the scope of the appended claims.

### Examples

### 1. Materials

### 1.1. Wax:

Refined yellow beeswax pellets was purchased from NZ Beeswax Ltd.

### 1.2. PHAs

Two different types of PHAs were used to cover the whole range of melting temperatures of PHAs:
- a fine powder of poly[(R)-3-hydroxybutyric acid] (PHB) of natural origin was obtained from Sigma-Aldrich (product 363502),
- PHA produced according to the following procedure.

Gram negative PHA-accumulating bacterial strain *Pseudomonas putida* mt-2 was cultivated in a 100L bioreactor to produce medium chain length polyhydroxyalkanoate (*mcl*-PHA or PHO). *P. putida* mt-2 produced *mcl*-PHA (9 % 3-hydroxyhexanoate, 91 % 3-hydroxyoctanoate content), similar to previously reported ratios (Blunt, W., Dartiailh, C., Sparling, R. et al. Carbon flux to growth or polyhydroxyalkanoate synthesis under microaerophilic conditions is affected by fatty acid chain-length in Pseudomonas putida LS46. Appl Microbiol Biotechnol 102, 6437-6449 (2018)).

Cell were resuspended to 400g/L in homogenization buffer containing: 10 mM Tris pH 7.5, 2 mM EDTA. SDS was added to 5% and cells were stirred to resuspend, before passing 3 times through a Microfluidics homogenizer M-110P at maximum pressure, cooled with ice. Ethanol was then added to 20% final concentration and the suspension centrifuged (20,000g, 1h, 10 C). After discarding the supernatant, the pellet was resuspended in an equal volume of buffer (10 mM Tris pH 7.5, 2 mM EDTA, 20% Ethanol). This washing/centrifugation was repeated twice, with resuspension in half the volume of buffer (10 mM Tris pH 7.5, 2 mM EDTA, 20% Ethanol)

The PHA produced has the following characteristics:
- Glass transition (°C)-40.2 (0.9)
- Peak melting (°C) 48.4 (0.2)

Table 1 shows the main particle size indicator of PHO/PHB measured by laser diffraction using a Mastersizer 2000 with the hydro 2000 module. Results have been processed using the Fraunhofer method.

**Table 1: Particle size main characteristics for PHO and PHB and Pine bark powder (volume distribution) using Fraunhofer method.**

| | d₁₀ (µm) | d₅₀ (µm) | d₉₀ (µm) | Span | Specific surface area (m2.g-1) |
|---|---|---|---|---|---|
| PHO | 0.689 | 1.197 | 3.451 | 2.306 | 5.19 |
| PHB | 3.9565 | 26.8135 | 74.827 | 2.643 | 0.6815 |
| Pine bark Powder | 3.346 | 21.427 | 78.441 | 3.505 | 0.756 |

### 1.3. Lignocellulosic biomass powder

The lignocellulosic biomass powder used in the experimentation is a fine Pine bark powder milled in JRU IATE (INRAE, Montpellier, France) in a vibratory ball mill (D10, Sweco) (Rajaonarivony, K.R., et al., Comparative comminution efficiencies of rotary, stirred and vibrating ball-mills for the production of ultrafine biomass powders. Energy, 2021. 227: p. 120508.).

The main characteristics of Pine bark powders are also provided in table 1.

### 1.4. Deep eutectic solvent: Reline

Reline was prepared from choline chloride purchased from Sigma Aldrich (CAS Number 67-48-1) and urea purchased from Merck (CAS number 57-13-6) in the molar ratio 1:2. Before mixing, both compounds were oven-dried at 55 °C for 12 hours (Agieienko, V. and R. Buchner, Densities, Viscosities, and Electrical Conductivities of Pure Anhydrous Reline and Its Mixtures with Water in the Temperature Range (293. 15 to 338.15) K. Journal of Chemical & Engineering Data, 2019. 64(11): p. 4763-4774).

The dried powders were then mixed at 80 °C until completely melted to produce reline, which was stored in an oven at 55 °C to prevent water uptake.

### 2. Process

Composite powders were produced according to two processes described below.

### 2.1. Composite powders prepared with emulsification process

Table 2 lists composite formulations that have been tested.

**Table 2: Composite formulations used to prepare composite powders by emulsification**

| | PHO (w/w) | Wax (w/w) | Biomass powder (w/w) |
|---|---|---|---|
| 1 | 60% | | 40% |
| 2 | 20% | 40% (beeswax) | 40% |
| 4 | | 60% (beeswax) | 40% |

The PHO and auxiliary matrix (wax and/or lignocellulosic powder) were melted on a hot plate and mixed by magnetic stirring or homogenization.

Hot water (90°C) was then added to the mixture to create an emulsion of oil in water (composite material content in water <0.5 v/v).

The best results in term of emulsion were obtained when the ratio was between 0.1 and 0.25 v/v). The following results were obtained with the o/w ratio of 0.2

The mixture was maintained at approximately 90°C for several minutes (at least 5 minutes). Homogeneous emulsions were prepared using a rotor/stator device (Ultra-Turrax T 25 disperser IKA^{®} T25) operating between 5000 and 125000 rpm, or an ultrasonic probe (VCX 750W, Sonics^{®}) operating at 45% of the total power for 30s to 90s. Best results were obtained using the rotor/stator device.

The emulsion was then rapidly cooled by direct addition of ice or cooled water (0°C) until the temperature was below 20°C, to solidify the droplets formed and create particles.

Particles were then separated from the liquid phase by filtration or centrifugation, and freeze dried. Best results were obtained with filtration.

Powders could be sieved with a screen between 150 and 250 µm to obtain a narrow size distribution.

In some experiments a surfactant, polysorbate 20, was added to improve emulsification. The polysorbate content was kept to <5 % of the total volume. Best results were obtained at a polysorbate 20 content in between 1 and 4 %.

Figure 1 shows the particle size distributions obtained after filtration of the samples. Particle size characteristics are summarized in Table 3. The median particle size (d₅₀) ranges from 40 to 75 µm, with a d₉₀ below 200 µm.

The sizes obtained are compatible with SLS processes. In addition, the particle size distribution is narrow (SPAN below 2) which will favour a better flowability.

**Table 3 : Particle size characteristics of powders obtained from emulsification**

| | D₁₀ µm | D₅₀ µm | D₉₀ µm | Span | Specific surface area (m²·g⁻¹) |
|---|---|---|---|---|---|
| Beeswax/Pine bark (0.6/0.4) | 22.5 | 72.5 | 145.3 | 1.693 | 0.212 |
| PHO/beeswax/Pine bark (0.2/0.4/0.4) | 19.7 | 53.6 | 122.3 | 1.915 | 0.258 |
| PHO/Pine bark (0.6/0.4) | 16.3 | 47.5 | 99.6 | 1.753 | 0.290 |

Figure 2 shows DSC measurements for PHO/Pine bark powders (figure 2a) and PHO/Beeswax/Pine bark composite powders (figure 2b). Typical DSC thermograms of the powder composites presented below indicate (a) a larger melt enthalpy for beeswax and (b) a potential large exotherm for PHO that is not present on the second ramp. This suggests that emulsification creates a potentially ordered structure that releases an endotherm which is not recovered when cooled down and heated; the materials properties and the crystallization time are improved, since crystallization is quicker and solidification faster, which simplifies the printing process.

### 2.2. Composite powders prepared from precipitation in eutectic solvent

Reline is a deep eutectic solvent (DES). The polymer can be solubilized by the simple addition of reline. These properties could be used in a process to create composite particles from PHB, wax and lignocellulosic powders.

In a first set of experiments (set 1): 100 mg of PHB and 100 mg of beeswax were melted separately in 10 ml of Reline at 80°C for 12 hours. Two experiments were conducted:
- 1.1: 1 mL of PHB in reline was mixed with 1 mL of wax in reline; homogenization was carried out with a magnetic stirrer, and 10 ml of pure cold water (2°C) was added, which caused instantaneous precipitation of particles;
- 1.2: 0.4 ml of PHB in reline and 0.4 ml of wax in reline were mixed with 0.4 g of Pine bark (PB) to obtain a melt composite at 20% w/w of Pine bark powder; then 10 ml of pure cold water (2°C) was added; once again and instantaneous precipitation was observed.

Figure 3 shows the particle size distributions compared to those of raw particles of PHB and waxes. The particle size distributions were measured by laser diffraction using a Mastersizer 2000 equipped with a Hydro2000S system. Data was processed using the Fraunhofer method.

The particle sizes obtained after precipitation were bigger than the original raw particles (PHB and Pine bark) confirming that a composite powder was obtained (i.e. a powder made from several components).

Particle size characteristics are summarized in Table 4.

**Table 4: particle size characteristics of powder obtained by precipitation in reline.**

| | D₁₀ µm | D₅₀ µm | D₉₀ µm | Span | Specific surface area (m²·g⁻¹) |
|---|---|---|---|---|---|
| PHB/Wax (0.5/0.5) | 3.5 | 29.4 | 92.1 | 3.09 | 0.73 |
| PHB/Wax/PB (0.4/0.4/0.2) | 2.9 | 28.1 | 106.4 | 3.68 | 0.76 |

The d90 of the two different powders is lower than 100 µm making particles at the right size for SLS applications. The powders have a larger SPAN that that produced by emulsification, but this may be improved by high shear mixing (with an Ultra-Turrax) or ultrasonic treatment during the addition of reline.

In a second set of experiments different formulations and concentrations were tested.

Table 5 summarizes these formulations.

**Table 5: Different formulations and concentrations of PHB and wax in Reline**

| Experiment numbers | PHB (mass in mg) | BeesWax (mass in mg) | Pine bark (mass in mg) | Reline (Volume in ml) |
|---|---|---|---|---|
| 2.1 | 500 | | | 15 |
| 2.2 | | 500 | | 15 |
| 2.3 | 250 | 250 | | 15 |
| 2.4 | | | 500 | 15 |
| 2.5 | 300 | | 200 | 15 |
| 2.6 | | 300 | 200 | 15 |
| 2.7 | 150 | 150 | 200 | 15 |
| 2.8 | | | | 15 |

After heating at 80°C for 12 hours, all the formulations melted/dissolved. Samples of 2 mL were taken, and 10 mL of cooled water added with stirring to precipitate the composite particles. The temperature of the final mixtures (including water) was below 12°C. Particles precipitated in all cases.

Formulations from different experiments have also been carried out to see the effect of dissolving/melting separately or together PHB and waxes as described below:
- 2.9 : 1 ml of experiment 2.1 & 1 ml of experiment 2.2. have been mix just before the addition of 10 ml of cooled water.
- 2.10: 0.6 ml of experiment 2.1, 0.6 ml of experiment 2.2, 0.8 ml of experiments 2.4 have been mix just before the addition of 10 ml of cooled water to obtain a composite with 40 % of mass of lignocellulosic powder.

The difference between experiments 2.3 and 2.9 and between 2.7 and 2.10 lies in the time in which the different components are at 80°C together before the addition of the cooled water (12 hours in case of experiments 2.3 and 2.7 ) and only few minutes for the experiments 2.9 et 2.10. In experiments 2.7 and 2.10 the mixing is done just before the precipitation of the particles.

In experiences 2.9 and 2.10, the mixing of the two matrices was visually improved in comparison of experiments 2.3 and 2.7.

In addition to confirm the composite character of the powder from experiment 2.3, 2.7, 2.9, 2.10, additional particle size measurements have been done after the precipitation of the particle for a blend of :
- 2.11 : sampling of 5 ml of experiment 2.1 and 5 ml of experiment 2.2.
- 2.12: sampling of 3 ml of experiment 2.1 and 3 ml of experiment 2.2, and 0.4 ml of experiment 2.4

Table 6 summarizes the main particle size characteristics measured by laser diffraction for the different formulations. The size obtained are in a suitable range for SLS printing. However important variations are observed between the formulation according to way the powders are precipitated. The span is also a little high, but this can be improved by using high shear mix or ultrasonic probe at an upper scale as previously discussed.

**Table 6: main particle size characteristics measured by laser diffraction for the different formulations**

| | D₁₀ µm | D₅₀ µm | D₉₀ µm | Span | Specific surface area (m²·g⁻¹) |
|---|---|---|---|---|---|
| 2.1 : PHB | 1.64 | 6.40 | 32.35 | 4.77 | 1.63 |
| 2.2 : Wax | 1.61 | 7.55 | 32.50 | 3.91 | 1.34 |
| 2.3 : PHB/wax (0.5/0.5) | 4.26 | 34.81 | 109.90 | 3.03 | 0.59 |
| 2.4: Pine bark | 3.72 | 16.27 | 56.09 | 3.22 | 0.73 |
| 2.5 : Wax/Pine bark (0.6/0.4) | 22.24 | 54.73 | 102.43 | 1.46 | 0.25 |
| 2.6 : PHB/Pine bark (0.6/0.4) | 2.64 | 12.65 | 47.48 | 3.55 | 0.99 |
| 2.7 PHB/Wax/Pine bark (0.3/0.3/0.4) | 7.35 | 78.84 | 327.72 | 4.04 | 0.37 |
| 2.8 : Control (pure reline) | N.D | N.D | N.D | N.D | N.D |
| 2.9 PHB/Wax (0.5/0.5), dissolve separately and mix just before their precipitation by addition of the cold water | 2.36 | 14.48 | 54.45 | 3.59 | 1.00 |
| 2.10 : PHB/Wax/Pine bark (0.3/0.3/0.4), dissolve separately and mix just before their precipitation by addition of the cold water | 2.25 | 11.63 | 51.11 | 4.20 | 1.06 |
| 2.11 : PHB/Wax (0.5/0.5) mix after the precipitation | 1.67 | 7.50 | 31.58 | 3.99 | 1.56 |
| 2.12 : PHB/Wax/Pine bark (0.3/0.3/0.4), mix after the precipitation | 2.00 | 10.16 | 38.57 | 3.60 | 1.18 |

Figure 4 shows the particle size distributions of powders precipitated separately (experiments 2.1; 2.2; 2.4 ) and mixed after precipitation (experiments 2.11 and 2.12).

The figure highlights that in case of mixing the powder after precipitation, the particle size distribution is typically the sum of the particle size distributions of each powder alone.

The Figure 5 shows the particle size distributions of composite powders mix before the precipitation.

The distributions are clearly different of the sum of the separate distributions, highlighting the character composite of the obtained powders.

Interestingly, some interactions between the different components in presence occurred during the melting process as the particle size distributions for the experiment 2.3 and 2.9 and 2.7 and 2.10 are different.

In the experiments 2.3, the behavior of the wax during the precipitation/crystallization drives the formation of the particle as the particle size distribution of the powder from the experiment 2.3 is closed to the particle size distribution of the experiment 2.2.

### 3. Laser printing

Tests have been conducted to confirm that the produce powders are SLS printable.

The tests were conducted with as a single laser pass operating at different levels of power in between 8% to 25 % of the full power (75 W) with a speed of 30 mm/s.

Patterns were obtained for PHO/BW/Pine bark and PHO/Pine bark, demonstrating that said powder are suitable for SLS printing.

## Claims

1. Composite powder, in particular suitable for additive manufacturing, wherein said composite powder comprises composite particles comprising:
- at least one polymer matrix chosen among polyhydroxyalkanoates (PHA), and
- at least one auxiliary matrix chosen among biobased fillers and biobased waxes.

2. Composite powder, according to claim 1, wherein said polyhydroxyalkanoates (PHA) of said at least one polymer matrix are chosen among polyhydroxybutyrate (PHB), polyhydroxyvalerate (PHV), polyhydroxyhexanoate (PHH), polyhydroxyoctanoate (PHO), and their copolymers.

3. Composite powder, according to any of the claims 1 or 2, wherein said composite particles comprise from 5 to 95% w/w, preferably from 5 to 80 % w/w, more preferably from 5 to 60 % w/w, of said at least one polymer matrix.

4. Composite powder, according to any of the claims 1 to 3, wherein said biobased fillers are chosen among cellulosic and/or lignin and/or lignocellulosic components, preferably among cellulose, lignin and lignocellulose.

5. Composite powder, according to any of the claims 1 to 4, wherein said composite particles comprise from 0 % to 95 % w/w of said biobased fillers.

6. Composite powder, according to any of the claims 1 to 5, wherein said biobased waxes are chosen among animal wax, as beeswax, plant wax or vegetal waxes and other mixture of wax esters, ester of fatty acids and/or fatty acids produced by animals or extracted from plant materials (including crude and refined waxes).

7. Composite powder, according to any of the claims 1 to 6, wherein said composite particles comprise from 0 % to 95 % w/w of said biobased waxes.

8. Composite powder, according to any of the claims 1 to 7, wherein said composite particles have a median size from 1 to 900 µm, preferably from 10 to 500 µm, preferably from 10 to 200 µm.

9. Process for preparation of a composite powder according to any one of the claims 1 to 8, comprising the following steps:
- a mixing step, wherein said at least one polymer matrix and said at least one auxiliary matrix, possibly with surfactant and/or Pickering particles, are mixed with heat input to obtain a mixture,
- an emulsion step, wherein said mixture is mixed with a dispersion phase to create an emulsion of oil in water type, said mixture forming a dispersed phase consisting of droplets,
- a solidification step, wherein said droplets are solidified to form said composite particles,
- a separation step, wherein said composite particles are separated from the dispersion phase.

10. Process for preparation of a composite powder according to any one of the claims 1 to 8, comprising the following steps:
- a solubilization step, wherein said at least one polymer matrix and said at least one auxiliary matrix are dissolved and/or dispersed in a deep eutectic solvent (DES), e.g. reline, and
- a precipitation step, wherein said at least one polymer matrix and said at least one auxiliary matrix are precipitated to obtain said composite particles.

11. Additive manufacturing, preferably additive laser manufacturing, preferably powdered additive manufacturing and more preferably selective laser sintering, comprising a step of bounding a composite powder according to any one of the claims 1 to 8.

12. Product obtained by an additive manufacturing according to claim 11.
